# EUROPEAN PATENT SPECIFICATION

(11) **EP 2 998 928 B1**
(45) Date of publication and mention of the grant of the patent: **15.02.2023**
(21) Application number: 14797460.4
(22) Date of filing: 13.05.2014
(51) Int. Cl.: G06T 7/00, G06T 7/73, G06V 20/40, G06V 20/52, G06T 1/00

(54) **APPARATUS AND METHOD FOR EXTRACTING HIGH WATERMARK IMAGE FROM CONTINUOUSLY PHOTOGRAPHED IMAGES**
VORRICHTUNG UND VERFAHREN ZUR EXTRAKTION EINES BILDES MIT HOHEM WASSERZEICHEN AUS KONTINUIERLICH FOTOGRAFIERTEN BILDERN
APPAREIL ET PROCÉDÉ D'EXTRACTION D'IMAGE À FILIGRANE ÉLEVÉ À PARTIR D'IMAGES PHOTOGRAPHIÉES EN CONTINU

(30) Priority: 14.05.2013 KR 20130054588
(43) Date of publication of application: 23.03.2016
(73) Proprietor: Samsung Electronics Co., Ltd., Suwon-si, Gyeonggi-do 443-742 (KR)
(72) Inventor: KIM, Hyun-Jun, Osan-si Gyeonggi-do 447-280 (KR); CHOI, Young-Sang, Seongnam-si Gyeonggi-do 463-736 (KR)
(74) Representative: Grünecker Patent- und Rechtsanwälte PartG mbB
(86) International application number: PCT/KR2014/004272
(87) International publication number: WO 2014/185691

(56) References cited:
- JP-A- 2007 081 682
- JP-A- 2009 278 287
- KR-A- 20100 060 181
- KR-A- 20110 037 485
- KR-A- 20120 012 208
- M. PANTIC ET AL: "Dynamics of facial expression: recognition of facial actions and their temporal segments from face profile image sequences", IEEE TRANSACTIONS ON SYSTEMS, MAN AND CYBERNETICS. PART B:CYBERNETICS., vol. 36, no. 2, April 2006 (2006-04), pages 433-449, XP055335003, US ISSN: 1083-4419, DOI: 10.1109/TSMCB.2005.859075
- COHEN I ET AL: "Facial expression recognition from video sequences: temporal and static modeling", COMPUTER VISION AND IMAGE UNDERSTANDING, ACADEMIC PRESS, US, vol. 91, no. 1-2, July 2003 (2003-07), pages 160-187, XP004451548, ISSN: 1077-3142, DOI: 10.1016/S1077-3142(03)00081-X
- MING ZHAO ET AL: "Large scale learning and recognition of faces in web videos", 8TH IEEE INTERNATIONAL CONFERENCE ON AUTOMATIC FACE & GESTURE RECOGNITION, FG '08, 17-19 SEPT. 2008, IEEE, PISCATAWAY, NJ, USA, 17 September 2008 (2008-09-17), pages 1-7, XP031448417, DOI: 10.1109/AFGR.2008.4813381 ISBN: 978-1-4244-2153-4
- SID-AHMED BERRANI ET AL: "Robust detection of outliers for projection-based face recognition methods", MULTIMEDIA TOOLS AND APPLICATIONS, KLUWER ACADEMIC PUBLISHERS, BO, vol. 38, no. 2, 2 November 2007 (2007-11-02), pages 271-291, XP019611989, ISSN: 1573-7721

## Description

### Technical Field

The present invention relates to an image processing technique, and more particularly to an apparatus and method for extracting a peak image from continuously photographed images.

### Background Art

When a recognition process is performed using continuously photographed images, various images other than an image to be recognized may be included. In order to improve recognition performance, a change in a subject in an image needs to be observed, and the observation requires a learning configuration in addition to still image recognition. Although the learning configuration is adapted for recognition, it is a challenge to enhance recognition precision dramatically. Further, recognition using a learning configuration requires much more processing compared to still image recognition, so it is not suitable to be used in a mobile device, such as a smart phone and a tablet PC.
M. Pantic and J. Patras, in a paper entitled "Dynamics of Facial Expression: Recognition of Facial Actions and Their Temporal Segments From Face Profile Image Sequences", IEEE Transactions on Systems, Man and Cybernetics Part B: Cybernetics, vol. 36, No. 2, April 2006, pages 433-449, teach a method for automatic analysis of human facial expressions, wherein changes in the human facial expressions are observable from changes of the positions of tracked points.
I. Cohen et al., in a paper entitled "Facial expression recognition from video sequences: temporal and static modeling", Computer Vision and Image Understanding, vol. 91, no. 1-2, July 2003, pages 160 to 187, teach a method of facial expression recognition from video sequences based on Gaussian and Cauchy-Naive based classifiers.
M. Zhao et al., in a paper entitled "Large Scale Learning and Recognition of Faces in Web Videos", 8th IEEE Conference on Automatic Face & Gesture Recognition, 17-19 September 2008, pages 1 to 7, teach a method of learning and recognizing faces by combining signals from large scale weakly labeled text, image and video corpora.
S.-A. Berrani and C. Garcia, in a paper entitled "Robust detection of outliers for projection-based face recognition methods", Multimedia Tools and Applications, vol. 38, no. 2, 2 November 2007, pages 271 to 291, teach the impact of outliers on the performance of high-dimensional data analysis methods for face recognition.

### Technical Problem

An object of the present invention is to provide an apparatus and method for extracting a peak image from continuously photographed images.

### Technical Solution

According to the invention, there is provided a face recognition system according to claim 1, a face recognition method according to claim 4, and a computer-readable medium according to claim 7. The invention is carried out according to the appended claims.

### Description of Drawings

FIG. 1 is a configuration diagram illustrating an apparatus for extracting a peak image according to an exemplary embodiment of the present invention.
FIG. 2 is a diagram to explain a method for determining a peak image according to a base image.
FIG. 3 is a flow chart illustrating a method for extracting a peak image according to an exemplary embodiment of the present invention.

### Mode for Invention

The invention is described more fully hereinafter with reference to the accompanying drawings, in which exemplary embodiments of the invention are shown. In the following description, a detailed description of known functions and configurations incorporated herein will be omitted when it may obscure the subject matter with unnecessary detail. Further, the following terms are defined in consideration of functions according to exemplary embodiments, and can be varied according to a purpose of a user or manager, or precedent and so on. Therefore, definitions of the terms should be made on the basis of the overall context.

In the following, a peak image refers to an image with a frame in which a pose or gesture of a subject changes most dramatically or an image with a frame in which such a change happens.

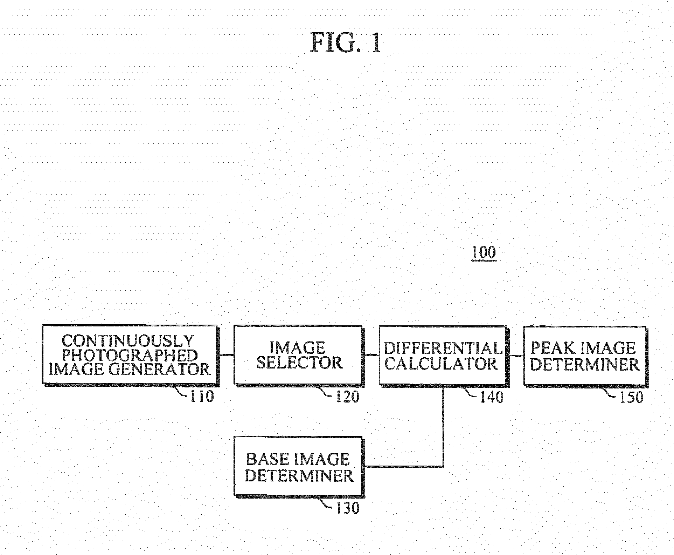

FIG. 1 is a configuration diagram illustrating an apparatus for extracting a peak image according to an exemplary embodiment of the present invention.

Herein, configuration units in the following exemplary embodiments are divided by functions thereof, and it does not mean that each configuration unit is a hardware or software element separate from each other. That is, each configuration unit are described for convenience of explanation. Thus, at least two configuration units may be integrated into one body or one configuration unit may be divided into a plurality of configuration units to perform the same function. Integration or division between configuration units may be possible within the scope of the invention as defined by the claims.

Referring to FIG. 1, an apparatus 100 for extracting a peak image includes a continuously photographed image generator 110, an image selector 120, a base image determiner 130, a difference value calculator 140, and a peak image determiner 150.

The continuously photographed image generator 110 photographs a subject continuously to thereby generate continuously photographed images. The continuously photographed image generator 110 may be a digital camera, a camcorder, a mobile phone, a portable multimedia player (PMP), a web cam and any device which can photograph a subject to thereby generate a plurality of continuously photographed images.

Meanwhile, the continuously photographed image generator 110 is included in the apparatus 100.

The image selector 120 select each of the continuously photographed images. In one embodiment, the image selector 120 may select images from among the continuously photographed images sequentially according to a point in time of generation.

The base image determiner 130 determines a base image according to a predetermined criterion. In one embodiment, the base image determiner 130 determines a base image from, an image registered by a user as a base image and an image considered based on a usage log of a user to demonstrate the most or least frequent facial expression of the user. In the event that the base image determiner 130 determines, as a base image, an image that is considered based on a usage log of a user to demonstrate the most or least frequent facial expression of a user, the apparatus 100 may further include a usage log storage (not shown) to store usage log information of the user.

In one embodiment, the base image determiner 130 may determine a single base image or a plurality of base images according to a usage or purpose or function of the present invention. In the case that the base image determiner 130 determines a plurality of base images, each base image is assigned with a different weight value and thus the different weight value is applied to a differential with respect to every different base image, so that a peak image may be determined based on the differential applied with the different weight value, as described in the following.

The differential calculator 140 calculate a differential between each image selected by the image selector 120 and a base image determined by the base image determiner 130.

The differential calculator 140 analyzes the image selected by the image selector 120 and each base image determined by the base image determiner 130. Then, the differential calculator 140 extracts a feature value from the selected image and each determined base image, respectively, and compares the extracted feature value of each base image with that of the selected image to determine similarity between each base image and the selected image so as to calculate a differential therebetween. Herein, the similarity may be determined by using edge histogram for each pixel on a defined region, using Active shape Model for facial landmark, comparing color histogram between the two images, comparing color variation between the two images, using Scalar Invariant Feature Transform (SIFT) algorithm, and using Speeded Up Robust Features (SURF) algorithm.

In one embodiment where the base image determiner 130 determines a single base image, the differential calculator 140 may apply a weight value to a specific region of a subject both in the base image and the image selected by the image selector so as to calculate a differential between the two images. That is, the differential calculator 140 may apply different weight values to eyes, nose and mouth of a subject in an image, and then calculate a differential between the base image and the selected image based on the different weight values.

In one embodiment where the base image determiner 130 determines a plurality of base images, when calculating a differentials between each of the plurality of base images and an image selected by the image selector 120, the differential calculator 140 accumulates the calculated differential between each of the plurality of base images and the selected image or calculates an average feature value between the plurality of base images and then compares the calculated average feature with a feature value of the selected image. In this case, a different weight value may be assigned to each base image, and, accordingly, the different weight value may be applied in a differential based on the selected image and each of the plurality of base images.

The peak image determiner 150 determines a peak image from among continuously photographed images based on a differential calculated by the differential calculator 140. In one embodiment, the peak image determiner 150 determines a peak image to be an image with the greatest or smallest differential among the continuously photographed images generated by the continuously photographed image generator 110.

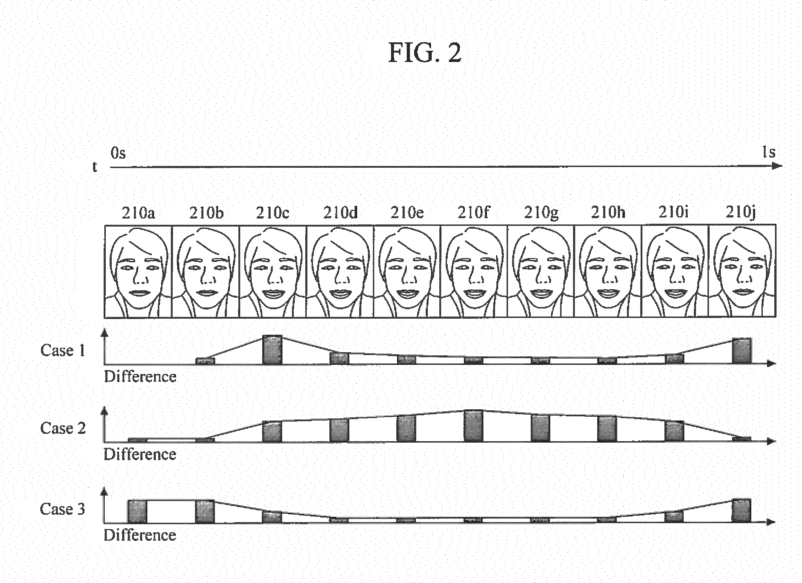

FIG. 2 is a diagram to explain a method for determining a peak image according to a base image. In this case, it is assumed that the continuously photographed image generator 110 generates ten continuously photographed images 210a to 210j per second.

With reference to FIG. 2, Case 1 is a case in which a base image is an image with a frame prior to or subsequent to that of an image selected by the image selector 120; Case 2 is a case in which a base image is an image of a user with an expressionless face; Case 3 is a case in which a base image is an image of a user with a smiley face. Herein, the base images in Case 2 and Case 3, determined by the base image determiner 130, are one of an image with a frame prior to or subsequent to that of an image selected by the selector 120 (option not being part of the present invention), an image registered by a user as a base image, any one of the continuously photographed images (option not being part of the present invention), and an image considered based on usage log information of a user to demonstrate the most or least frequent facial expression of the user.

In Case 1 (not being part of the present invention) in which a base image is an image with a frame prior to that of an image selected by the image selector 120, the differential calculator 140 calculates a differential between images adjacent to each other through comparison. At this point, from among the continuously photographed images 210a to 210j, the peak image determiner 150 may determine, as peak image, the image 210c of which a differential with respect to the base image exceeds a predetermined threshold.

In Case 2 in which a base image is an image of a user with an expressionless face, the differential calculator 140 compares the base image with each of the continuously photographed images to thereby calculate a differential therebetween. At this point, from among the continuously photographed images 210a to 210j, the peak image determiner 150 may determine, as a peak image, the image 210f of which differential with respect to the base image is greatest among the continuously photographed images.

In Case 3 in which a base image is an image of a user with a smiley face, the differential calculator 140 compares the base image with each of the continuously photographed images to thereby generate a differential therebetween. At this point, the peak image determiner 150 may determine, as a peak image, the image 210f of which differential with respect to the base image is smallest among the continuously photographed images.

In the above descriptions about Cases 1, 2 and 3, peak images have been determined using different criteria. However, the same criterion may be applied in the above cases or two or more different criteria may be applied in each case.

Hereinafter, a system in which the apparatus 100 is applied is described with embodiments. The apparatus 100 is applied in a facial expression recognition system and a face recognition system.

The facial expression recognition system is designed to recognize a facial expression of a user, to suppose emotion of the user and to provide various services based on the supposed emotion of the user. A changed facial muscle may convey a significant meaning, compared to an unchanged facial muscle. Thus, when the apparatus 100 is applied in the facial expression recognition system, the images 210c and 210 j, in which there are changes in facial expression, or the image 210f, in which facial expression starts to change, may be extracted and provided as an input to the facial expression recognition system, thereby improving precision of the system and reducing an error rate in facial expression recognition.

The face recognition system is designed to recognize a face for identification and provide various services to the identified user. Since a changed facial muscle may convey a significant meaning, compared to an unchanged facial muscle, if the apparatus 100 is applied in face recognition system, the apparatus 100 recognizes a sudden change in facial expression, which may causes an error in face recognition, extracts the sudden change as a peak image, and then provides the rest images other than the extracted peak image to the face recognition system, thereby improving precision in face recognition.

In the above-described embodiments, the apparatus 100 is applied in a facial expression recognition system or a face recognition system. In addition, the apparatus 100 may be applied in a system that provides services by recognizing a face expression during a short given time to find out preference of a user or a system that provides services by calculating a time for which a face expression lasts to find out a state of a user, such as concentration.

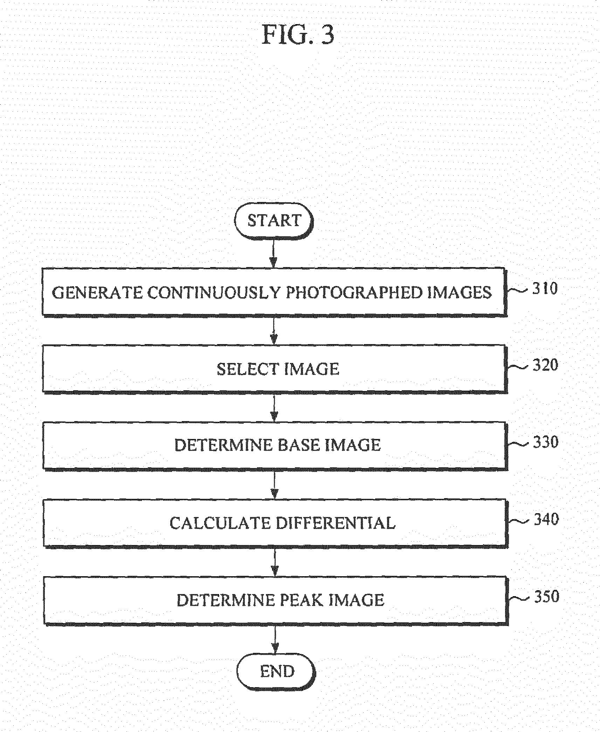

FIG. 3 is a flow chart illustrating a method for extracting a peak image according to an exemplary embodiment of the present invention.

Referring to FIG. 3, the method for extracting a peak image starts out by photographing a subject continuously to thereby generate continuously photographed images in 310. The continuously photographed image generator 110 photographs a subject continuously to thereby generate continuously photographed images.

Then, one of the continuously photographed images is selected in 320. For example, the image selector 120 may select images from the continuously photographed images sequentially according to a point of time of generation.

Then, in 330, a base image is determined according to a predetermined criterion to calculate a differential with respect to the image selected in operation 320. The base image determiner 130 determines a base image from among an image with a frame prior to or subsequent to that of the image selected by the image selector 130 (option not being part of the present invention), an image registered by a user as a base image, any one of the continuously photographed images (not being part of the present invention), and an image considered based on usage log information of a user to demonstrate the most or least frequent facial expression of the user. At this point, the base image determiner 130 may determine a single base image or a plurality of base images according to usage or purpose of the invention.

Then, a differential between the image selected in operation 320 and the determined base image is calculated in 340. The differential calculator 140 calculates a differential between the selected image and the base image by analyzing both the selected image and the base image to thereby generate respective feature values of the selected image and the base image, and then comparing the feature values with each other to thereby calculate similarity between the two images. When calculating the differential between the two images, the differential calculator 140 may apply a weight value to a specific region of a subject in both the images. In addition, when the base image determiner 130 determines a plurality of base images, the differential calculator 140 may accumulate a calculated differential between the selected image and each of the plurality of base images, or may calculate an average feature value between the plurality of base images and then compare the calculated average feature value with a feature value of the selected image to calculate a differential between the selected image and each of the plurality of base images. Further, a different weight value may be assigned to each base image, and, accordingly, the different weight value may be applied to a differential between the selected image and each base image.

Then, a peak image is determined based on the calculated differential in 350. The peak image determiner 150 determines a peak image from among continuously photographed image based on the calculated differential. In one embodiment, the peak image determiner 150 determines a peak image to be an image with the greatest or smallest differential among the continuously photographed images.

It will be apparent to those skilled in the art that various modifications and variation can be made in the present invention without departing from the scope of the invention. Thus, it is intended that the present invention cover the modifications and variations of this invention provided they come within the scope of the appended claims.

## Claims

1. A face recognition system comprising an apparatus (100), the apparatus (100) comprising:
a base image determiner (130) configured to determine at least one base image from among an image registered by a user as a base image and an image considered based on a usage log of a user to demonstrate the most or least frequent facial expression of the user;
a continuously photographed image generator (110) configured to generate continuously photographed images by continuously photographing a subject;
an image selector (120) configured to select each of the continuously photographed images;
a difference calculator (140) configured to extract a feature value of a feature from the at least one base image and for each of the selected images a feature value of the feature from the selected image, respectively, and to calculate a difference between the at least one base image and each of the selected images based on the extracted feature values; and
a peak image determiner (150) configured to determine a peak image from among the continuously photographed images as an image with the greatest or smallest difference to the base image from among the plurality of continuously photographed images, wherein when the base image represents a most frequent expression of the subject, the peak image is determined as the one with the greatest difference to the base image, and when the base image represents a least frequent expression of the subject, the peak image is determined as the one with the smallest difference to the base image; and
wherein the apparatus (100) is configured to provide the continuously photographed images without the determined peak image for face recognition.

2. The system of claim 1, wherein in response to a plurality of base images being determined, the difference calculator (140) is further configured to accumulate a calculated difference between a respective selected image of the selected images and each of the plurality of base images or to compare an average feature value between the plurality of base images with a feature value of the respective selected image of the selected images.

3. The system of one of claims 1 and 2, wherein the difference calculator (140) is further configured to calculate the difference between the at least one base image and the respective selected image of the selected images selected image by applying different weight values to different specific regions of a subject in an image.

4. A method of face recognition, the method comprising
determining (330) at least one base image from among an image registered by a user as a base image and an image considered based on a usage log of a user to demonstrate the most or least frequent facial expression of the user;
generating (310) continuously photographed images by continuously photographing a subject;
selecting (320) each of the continuously photographed images; extracting a feature value of a feature from the at least one base image and for each of the selected images a feature value of the feature from the selected image, respectively;
calculating (340) a difference between the at least one base image and the selected image based on the extracted feature values; and
determining (350) a peak image from among the continuously photographed images as an image with the greatest or smallest difference to the base image from among the plurality of continuously photographed images, wherein when the base image represents a most frequent expression of the subject, the peak image is determined as the one with the greatest difference to the base image, and when the base image represents a least frequent expression of the subject, the peak image is determined as the one with the smallest difference to the base image; and
using the continuously photographed images without the determined peak image for the face recognition.

5. The method of claim 4, wherein in response to a plurality of base images being determined, the calculating (340) of the difference comprises accumulating a calculated difference between a respective selected image of the selected images and each of the plurality of base images or comparing an average feature value between the plurality of base images with a feature value of the respective selected image of the selected images.

6. The method of one of claims 4 and 5, wherein the calculating (340) of the difference comprises calculating the difference between the at least one base image and the respective selected image of the selected images by applying different weight values to specific regions of a subject in an image.

7. A computer-readable medium having instructions that, when performed by a processor, cause the processor to perform the method of face recognition according to one of claims 4 to 6.

## Patentansprüche

1. Ein Gesichtserkennungssystem mit einer Vorrichtung (100), wobei die Vorrichtung (100) umfasst:
einen Basisbildbestimmer (130), der dazu ausgebildet ist, zumindest ein Basisbild aus einem Bild, das von einem Nutzer als Basisbild gespeichert wurde, und einem Bild, das auf der Grundlage eines Nutzungsprotokolls eines Nutzers als den häufigsten oder am wenigsten häufigen Gesichtsausdruck des Nutzers darstellend angesehen wird, zu bestimmen;
einen Erzeuger (110) kontinuierlich fotografierter Bilder, der dazu ausgebildet ist, kontinuierlich fotografierte Bilder durch kontinuierliches Fotografieren eines Subjekts zu erzeugen;
einen Bildauswähler (120), der dazu ausgebildet ist, jedes der kontinuierlich fotografierten Bilder auszuwählen;
einen Differenzberechner (140), der dazu ausgebildet ist, einen Merkmalswert eines Merkmals von dem zumindest einen Basisbild beziehungsweise für jedes der ausgewählten Bilder einen Merkmalswert des Merkmals von dem ausgewählten Bild zu extrahieren und eine Differenz zwischen dem zumindest einen Basisbild und jedem der ausgewählten Bilder auf der Grundlage der extrahierten Merkmalswerte zu berechnen; und
einen Extremwertbildbestimmer (150), der dazu ausgebildet ist, aus den kontinuierlich fotografierten Bildern ein Extremwertbild als ein Bild von den kontinuierlich fotografierten Bildern mit der größten oder kleinsten Differenz zu dem Basisbild zu bestimmen, wobei, wenn das Basisbild einen häufigsten Ausdruck des Subjekts darstellt, das Extremwertbild als dasjenige mit der größten Differenz zu dem Basisbild bestimmt wird, und wenn das Basisbild einen am wenigsten häufigen Ausdruck des Subjekts darstellt, das Extremwertbild als dasjenige mit der kleinsten Differenz zum Basisbild bestimmt wird; und
wobei die Vorrichtung (100) dazu ausgebildet ist, die kontinuierlich fotografierten Bilder ohne das bestimmte Extremwertbild zur Gesichtserkennung bereitzustellen.

2. Das System von Anspruch 1, in dem der Differenzberechner (140) weiterhin dazu ausgebildet ist, in Reaktion darauf, dass mehrere Basisbilder bestimmt werden, eine berechnete Differenz zwischen einem jeweils ausgewählten Bild der ausgewählten Bilder und jedem der mehreren Basisbilder zu akkumulieren oder einen mittleren Merkmalswert der mehreren Basisbilder mit einem Merkmalswert des jeweils ausgewählten Bilds der ausgewählten Bilder zu vergleichen.

3. Das System von einem der Ansprüche 1 und 2, in dem Differenzberechner (140) weiterhin dazu ausgebildet ist, die Differenz zwischen dem zumindest einen Basisbild und dem jeweils ausgewählten Bild der ausgewählten Bilder durch Anwenden verschiedener Gewichtungswerte auf verschiedene bestimmte Gebiete eines Subjekts in einem Bild zu berechnen.

4. Ein Verfahren zur Gesichtserkennung, wobei das Verfahren umfasst:
Bestimmen (330) zumindest eines Basisbilds aus einem Bild, das von einem Nutzer als Basisbild gespeichert wurde, und einem Bild, das auf der Grundlage eines Nutzungsprotokolls eines Nutzers als den häufigsten oder am wenigsten häufigen Gesichtsausdruck des Nutzers darstellend angesehen wird;
Erzeugen (310) kontinuierlich fotografierter Bilder durch kontinuierliches Fotografieren eines Subjekts;
Auswählen (320) jedes der kontinuierlich fotografierten Bilder;
Extrahieren eines Merkmalswerts eines Merkmals von dem zumindest einen Basisbild beziehungsweise eines Merkmalswerts des Merkmals von dem ausgewählten Bild für jedes der ausgewählten Bilder;
Berechnen (340) einer Differenz zwischen dem zumindest einen Basisbild und dem ausgewählten Bilder auf der Grundlage der extrahierten Merkmalswerte; und
Bestimmen (350) aus den kontinuierlich fotografierten Bildern eines Extremwertbild als ein Bild von den kontinuierlich fotografierten Bildern mit der größten oder kleinsten Differenz zu dem Basisbild, wobei, wenn das Basisbild einen häufigsten Ausdruck des Subjekts darstellt, das Extremwertbild als dasjenige mit der größten Differenz zu dem Basisbild bestimmt wird, und wenn das Basisbild einen am wenigsten häufigen Ausdruck des Subjekts darstellt, das Extremwertbild als dasjenige mit der kleinsten Differenz zum Basisbild bestimmt wird; und
Verwenden der kontinuierlich fotografierten Bilder ohne das bestimmte Extremwertbild zur Gesichtserkennung.

5. Das Verfahren von Anspruch 4, in dem das Berechnen (340) der Differenz in Reaktion darauf, dass mehrere Basisbilder bestimmt werden, Akkumulieren einer berechneten Differenz zwischen einem jeweils ausgewählten Bild der ausgewählten Bilder und jedem der mehreren Basisbilder oder Vergleichen eines mittleren Merkmalswerts der mehreren Basisbilder mit einem Merkmalswert des jeweils ausgewählten Bilds der ausgewählten Bilder umfasst.

6. Das Verfahren von einem der Ansprüche 4 und 5, in dem das Berechnen (340) der Differenz Berechnen der Differenz zwischen dem zumindest einen Basisbild und dem jeweils ausgewählten Bild der ausgewählten Bilder durch Anwenden verschiedener Gewichtungswerte auf verschiedene bestimmte Gebiete eines Subjekts in einem Bild umfasst.

7. Ein computerlesbares Medium, das Anweisungen enthält, die, wenn sie von einem Prozessor ausgeführt werden, den Prozessor dazu veranlassen, das Verfahren zur Gesichtserkennung gemäß einem der Ansprüche 4 bis 6 auszuführen.

## Revendications

1. Système de reconnaissance faciale comprenant un appareil (100), l'appareil (100) comprenant:
un dispositif de détermination d'image de base (130) configuré pour déterminer au moins une image de base parmi une image enregistrée par un utilisateur comme image de base et une image considérée sur la base d'un journal d'utilisation d'un utilisateur pour démontrer l'expression faciale la plus fréquente ou la moins fréquente de l'utilisateur;
un générateur d'images photographiées en continu (110) configuré pour générer des images photographiées en continu en photographiant en continu un sujet;
un sélecteur d'images (120) configuré pour sélectionner chacune des images photographiées en continu;
un calculateur de différence (140) configuré pour extraire une valeur de caractéristique parmi une caractéristique de ladite au moins une image de base et pour chacune des images sélectionnées une valeur de caractéristique de la caractéristique de l'image sélectionnée, respectivement, et pour calculer une différence entre ladite au moins une image de base et chacune des images sélectionnées sur la base des valeurs de caractéristiques extraites; et
un dispositif de détermination d'image de crête (150) configuré pour déterminer une image de crête parmi les images photographiées en continu en tant qu'image présentant la plus grande ou la plus petite différence par rapport à l'image de base parmi la pluralité d'images photographiées en continu, dans lequel lorsque l'image de base représente une expression la plus fréquente du sujet, l'image de crête est déterminée comme celle présentant la plus grande différence par rapport à l'image de base, et lorsque l'image de base représente une expression la moins fréquente du sujet, l'image de crête est déterminée comme celle présentant la plus petite différence par rapport à l'image de base; et
dans lequel l'appareil (100) est configuré pour fournir les images photographiées en continu sans l'image de crête déterminée pour la reconnaissance faciale.

2. Système selon la revendication 1, dans lequel en réponse à la détermination d'une pluralité d'images de base, le calculateur de différence (140) est en outre configuré pour accumuler une différence calculée entre une image sélectionnée respective des images sélectionnées et chacune de la pluralité d'images de base ou pour comparer une valeur de caractéristique moyenne entre la pluralité d'images de base avec une valeur de caractéristique de l'image sélectionnée respective des images sélectionnées.

3. Système selon l'une des revendications 1 et 2, dans lequel le calculateur de différence (140) est en outre configuré pour calculer la différence entre ladite au moins une image de base et l'image sélectionnée respective des images sélectionnées en appliquant différentes valeurs de pondération à différentes régions spécifiques d'un sujet dans une image.

4. Procédé de reconnaissance, le procédé comprenant les opérations suivantes:
déterminer (330) au moins une image de base parmi une image enregistrée par un utilisateur comme image de base et une image considérée sur la base d'un journal d'utilisation d'un utilisateur pour démontrer l'expression faciale la plus fréquente ou la moins fréquente de l'utilisateur;
générer (310) des images photographiées en continu en photographiant en continu un sujet;
sélectionner (320) chacune des images photographiées en continu;
extraire une valeur de caractéristique d'une caractéristique à partir de ladite au moins une image de base et, pour chacune des images sélectionnées, une valeur de caractéristique de ladite caractéristique à partir de l'image sélectionnée, respectivement;
calculer (340) une différence entre ladite au moins une image de base et l'image sélectionnée sur la base des valeurs de caractéristiques extraites; et
déterminer (350) une image de crête parmi les images photographiées en continu en tant qu'image présentant la plus grande ou la plus petite différence par rapport à l'image de base parmi la pluralité d'images photographiées en continu, dans laquelle lorsque l'image de base représente une expression la plus fréquente du sujet, l'image de crête est déterminée comme celle présentant la plus grande différence par rapport à l'image de base, et lorsque l'image de base représente une expression la moins fréquente du sujet, l'image de crête est déterminée comme celle présentant la plus petite différence par rapport à l'image de base; et
utiliser les images photographiées en continu sans l'image de pointe déterminée pour la reconnaissance du visage.

5. Procédé selon la revendication 4, dans lequel, en réponse à la détermination d'une pluralité d'images de base, le calcul (340) de la différence comprend l'accumulation d'une différence calculée entre une image sélectionnée respective des images sélectionnées et chacune de la pluralité d'images de base ou la comparaison d'une valeur de caractéristique moyenne entre la pluralité d'images de base avec une valeur de caractéristique de l'image sélectionnée respective des images sélectionnées.

6. Procédé selon l'une des revendications 4 et 5, dans lequel le calcul (340) de la différence comprend le calcul de la différence entre ladite au moins une image de base et l'image sélectionnée respective des images sélectionnées en appliquant différentes valeurs de pondération à des régions spécifiques d'un sujet dans une image.

7. Support lisible par ordinateur comportant des instructions qui, lorsqu'elles sont exécutées par un processeur, amènent le processeur à exécuter le procédé de reconnaissance faciale ion selon l'une des revendications 4 à 6.
